# EUROPÄISCHE PATENTSCHRIFT

(11) **EP 1 012 951 B1**
(45) Veröffentlichungstag und Bekanntmachung des Hinweises auf die Patenterteilung: **17.04.2002**
(21) Anmeldenummer: 98951262.9
(22) Anmeldetag: 02.09.1998
(51) Int. Cl.: H02K 15/04

(54) **VERFAHREN UND VORRICHTUNG ZUR HERSTELLUNG EINER VERTEILTEN WELLENWICKLUNG**
METHOD AND DEVICE FOR PRODUCING A DISTRIBUTED WAVE WINDING
PROCEDE ET DISPOSITIF POUR PRODUIRE EN ENROULEMENT ONDULE REPARTI

(30) Priorität: 08.09.1997 DE 19739353
(43) Veröffentlichungstag der Anmeldung: 28.06.2000
(73) Patentinhaber: Elmotec Elektro-Motoren-Technik GmbH, 61184 Karben (DE)
(72) Erfinder: SADIKU, Sadik, D-63543 Neuberg (DE)
(74) Vertreter: Jochem, Bernd , Dipl.-Wirtsch.-Ing
(86) Internationale Anmeldenummer: DE9802586
(87) Internationale Veröffentlichungsnummer: WO9913555

(56) Entgegenhaltungen:
- DE-A- 3 522 085
- DE-A- 4 306 624
- US-A- 5 316 227

## Beschreibung

Die Erfindung betrifft ein Verfahren zur Herstellung einer verteilten Wellenwicklung für elektrische Motoren oder Generatoren, insbesondere solche mit hoher Polzahl, sowie eine Vorrichtung zu dessen Durchführung.

Bei einfachen, unverteilten Wellenwicklungen (siehe EP 0226 550 B1, Fig.1) ist jede Phase ein einziger wellenförmiger Spulenstrang, der dann im Stator eingezogen eine gleiche Windungszahl in den Statornuten wie auch in den Stator-Wickelköpfen aufweist. Dieses hat den Nachteil, daß bei drei in den Stator eingebrachten Phasen Kreuzungen entstehen, die den Wickelkopf unnötig vergrößern und hierdurch, abgesehen von anderen Nachteilen, insbesondere einen hohen Füllfaktor verhindern. Deshalb ist in der Regel eine sog. verteilte Wicklung vorzuziehen, bei der die in einer Nut des Stators liegenden Drahtabschnitte auf jeder Stirnseite des Stators teilweise in die eine und teilweise in die andere Umfangsrichtung laufen (siehe DE 29 21 114, Fig.2). Somit sind die Wickelköpfe einer Phase verteilt und bilden zusammen mit den anderen gleich angeordneten Phasen einen relativ schmalen Wickelkopf.

Wenn die Wellenwicklung z.B. gemäß DE 23 51 952 B2 oder DE 31 20 865 A1 im wesentlichen rund vorgewickelt, dann zu einem stern- bzw. wellenförmigen Querschnitt verformt und dann eingezogen wird, können zwar auch Zweischichtwellenwicklungen hergestellt werden, aber die beiden Schichten können nicht ohne Drahtunterbrechung nacheinander gewickelt werden, sondern müssen nach dem Einziehen, bei dem sich die in der DE 35 22 085 C2 gezeigte Situation ergibt, durch eine sog. Schaltverbindung miteinander verbunden werden.

Schließlich ist es durch die DE 42 44 488 C1 auch bereits bekannt, konzentrische wellenförmige Windungen mittels einer relativ zu einer feststehenden Schablone umlaufenden Wickeldüse zu erzeugen und wie beschrieben ohne Drahtunterbrechung auch eine verteilte Wicklung herzustellen. Letzteres ist jedoch nur möglich mit Hilfe einer in der Veröffentlichung nicht gezeigten aufwendigen Längenziehvorrichtung. Denn beim Anwickeln einer zweiten Spulengruppe ist es erforderlich, das Ende der bereits abgestreiften ersten Spulengruppe mittels einer Längenziehvorrichtung zu halten.
Bei diesem Verfahren besteht, abgesehen von der benötigten aufwendigen Längenziehvorrichtung, der Nachteil, daß eine umlaufende Wickeldüse die Spulen wickelt. Hierdurch können höchstens zwei parallele Wickeldrähte verarbeitet werden. Diese Einschränkung entsteht dadurch, daß die umlaufende Wickeldüse ein Flyer mit mehreren Wickeldrahtumlenkungen ist.
Insbesondere für Generatoren ist es erforderlich, Wicklungen mit mehrals zwei parallelen Drähten herzustellen, und deshalb stößt die bekannte Vorrichtung an ihre Grenzen, da schon bei 2 parallelen Drähten Kreuzungen im Flyer und auf der Schablone entstehen, die sich auf das Einziehen und auf die Verteilung im Wickelkopf auswirken.

Der Erfindung liegt daher die Aufgabe zugrunde, ein Verfahren der eingangs genannten Art und eine zu dessen Durchführung geeignete Vorrichtung zu schaffen, welche mit kurzer Taktzeit die Herstellung einer verteilten Wicklung mit einer Schaltverbindung zwischen den Spulengruppen und Verarbeitung von mehreren parallelen Drähten gestatten.

Vorstehende Aufgabe wird nach dem erfindungsgemäßen Verfahren dadurch gelöst, daß nach dem Abstreifen einer konzentrischen Spulengruppe zwischen Schablone und Spulenaufnehmer eine relative Indexierung folgt und anschließend auf der Schablone eine weitere konzentrische Spulengruppe der gleichen Phase mit einer Schaltverbindung zur vorherigen Spulengruppe gewickelt und in den Spulenaufnehmer abgestreift wird.

Die Erfindung bietet den Vorteil, daß das Anwickeln der zweiten Spulengruppe ohne aufwendige Längenzieheinrichtung erfolgt, da das Ende der ersten Spulengruppe nach dem Abstreifen schräg über eine Flanke einer Nocke der Schablone führt, so daß beim Anwickeln der zweiten Spulengruppe der Wickeldraht von der Schablone mitgenommen wird. In bestimmten Fällen, insbesondere bei dünneren Drähten, ist es erforderlich, daß ein Niederhalter die bereits gewickelte erste Spulengruppe im Spulenaufnehmer zurück und in Position hält, damit beim Anwickeln der zweiten Spulengruppe sich der Wickeldraht nicht aus dem Spulenaufnehmer, sondern nur aus der Drahtführungsdüse nachzieht.

Ein weiterer Vorteil besteht darin, daß insbesondere die für die Statoren von Generatoren erforderlichen Paralleldrähte - zur Zeit 4 parallele Drähte - verarbeitet werden können, ohne daß hierbei zwischen den einzelnen Drähten Kreuzungen entstehen, da die einzelnen Drähte aus Drahtvorratstonnen direkt über eine Drahtführungsdüse auf die Schablone geführt werden. Die Erfindung erlaubt, auch ein Vielfaches der zur Zeit geforderten 4 parallelen Drähte zu verarbeiten.

Die Erfindung ist auch so ausgelegt, daß eine Phase in mehr als zwei Spulengruppen aufteilbar ist. Das kann heißen, daß zum Beispiel eine Phase in sechs Spulengruppen aufgeteilt ist. In diesem Beispiel verlängert sich zwar die Taktzeit, aber es entsteht eine bessere Wickelkopfverteilung am Stator. Diese ändert aber nichts am erfinderischen Gedanken, daß die sechs Spulengruppen mit Schaltverbindung gewickelt sind. Dies wird dadurch erreicht, daß beim Wickeln jeweils einer weiteren Spulengruppe die Schablone und der Spulenaufnehmer synchron drehen und somit auch die jeweils gewickelten Spulengruppen, die im Spulenaufnehmer abgelegt sind. Die synchrone Drehung erfolgt durch eine mittig aus der Schablone kommende Mitnehmerstange, die in den Einziehstern einkuppelt und durch einen Schablonenantrieb gemeinsam in Drehung versetzt wird.

Die zur Durchführung des neuen Verfahrens erfindungsgemäß vorgesehene Vorrichtung ist dadurch gekennzeichnet, daß die Schablone und der Spulenaufnehmer nach dem Abstreifen mittels Abstreifer einer konzentrischen Spulengruppe durch ein Antriebsmittel relativ zueinander indexierbar sind und anschließend auf der Schablone eine weitere Spulengruppe der gleichen Phase mit einer Schaltverbindung zur vorherigen Spulengruppe wickelbar und in den Spulenaufnehmer mittels Abstreifer abstreifbar ist.
- Fig. 1: eine Wickelvorrichtung für eine Wellenwicklung und einen Spulenaufnehmer mit einer Spulengruppe
- Fig. 2: eine gleiche Vorrichtung wie Fig. 1, jedoch mit zwei Spulengruppen
- Fig. 3: einen Querschnitt durch Fig. 1
- Fig. 4: einen Querschnitt durch Fig. 2
- Fig. 5: ein Schaltbild zweier Spulengruppen.

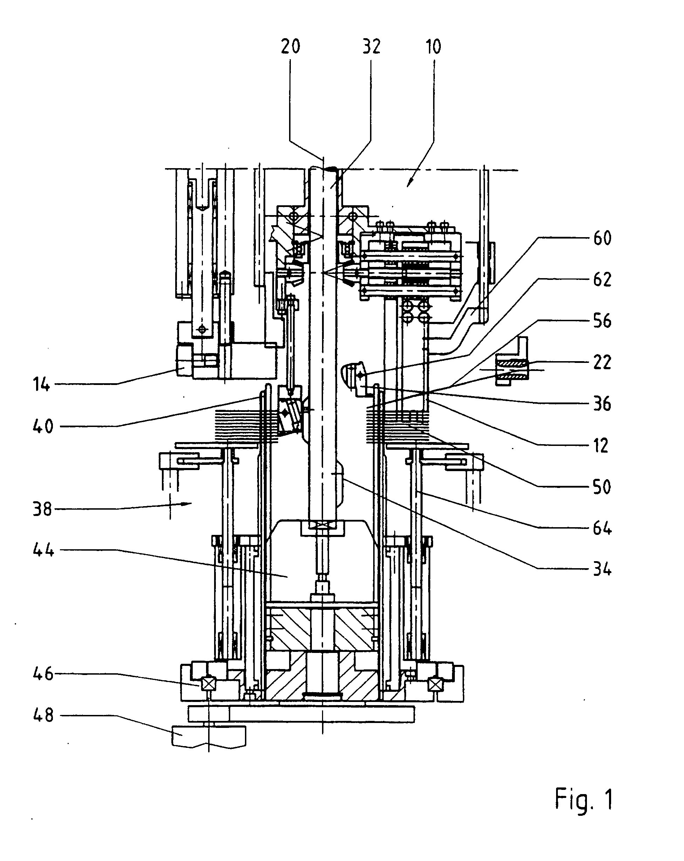

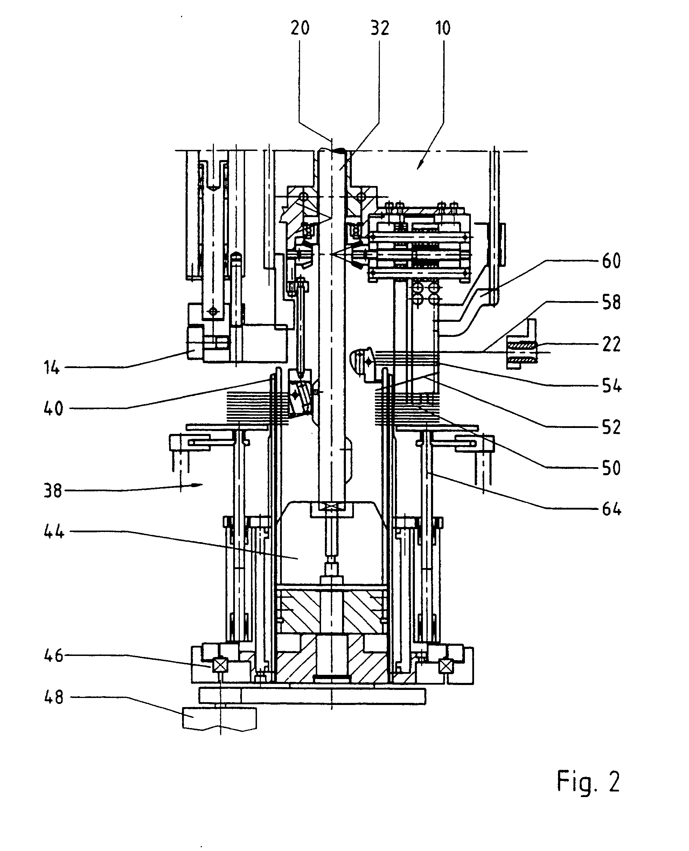

Die Fig. 1 u. Fig. 2 zeigen in einem Längsschnitt eine Ausführungsform der Erfindung, wobei das Wickelprinzip bereits näher in der DE-OS 43 06 624 beschrieben wurde. Der Wickler 10 besteht aus einer Schablone 12 und Formelementen 14, 16 u. 18, welche um eine gemeinsame Achse 20 durch einen nicht näher dargestellten Motor rotierbar ausgebildet sind, und einer Drahtführungsdüse 22, die ortsfest angeordnet ist. In der Achse 20 ist eine mit der Schablone 12 synchron drehbare Mitnehmerstange 32 angeordnet, die eine formschlüssige Verbindung mit einem Spulenaufnehmer 38 herstellen kann. An der Mitnehmerstange 32 ist eine Nocke 34 befestigt, die einen Niederhalter 36 steuert.

Der Spulenaufnehmer 38 besteht im Beispielsfall aus einzelnen im Kreis angeordneten Einziehlamellen 40, zwischen denen Schlitze gebildet sind, welche die fertig gewickelten Spulen aufnehmen. Im Zentrum der Einziehlamellen 40 ist ein Einziehstem 44 angeordnet, der mit der Mitnehmerstange 32 kuppelbar ist. Der kompl. Spulenaufnehmer 38 ist durch ein Lager 46 gegenüber einem nicht gezeigten Gehäuse drehbar gelagert und mittels Antriebsmotor 48 in eine andere Drehwinkelstellung in Bezug auf die Schablone 12 indexierbar. Es ist auch möglich, die Indexierung des Spulenaufnehmers 38 über die Mitnehmerstange 32 vorzunehmen.

Fig. 1 zeigt eine erste bereits gewickelte und von der Schablone 12 in den Spulenaufnehmer 38 abgestreifte Spulengruppe 50 mit einer Schaltverbindung 52 zur Drahtführungsdüse 22.

Fig. 2 zeigt eine gleiche Darstellung wie Fig. 1, jedoch mit einer zweiten Spulengruppe 54, wobei die Schaltverbindung 52 sich automatisch beim Anwickeln der zweiten Spulengruppe 54 zwischen den zwei Spulengruppen 50 und 54, ohne eine unnötige Länge zu bilden, integriert hat.

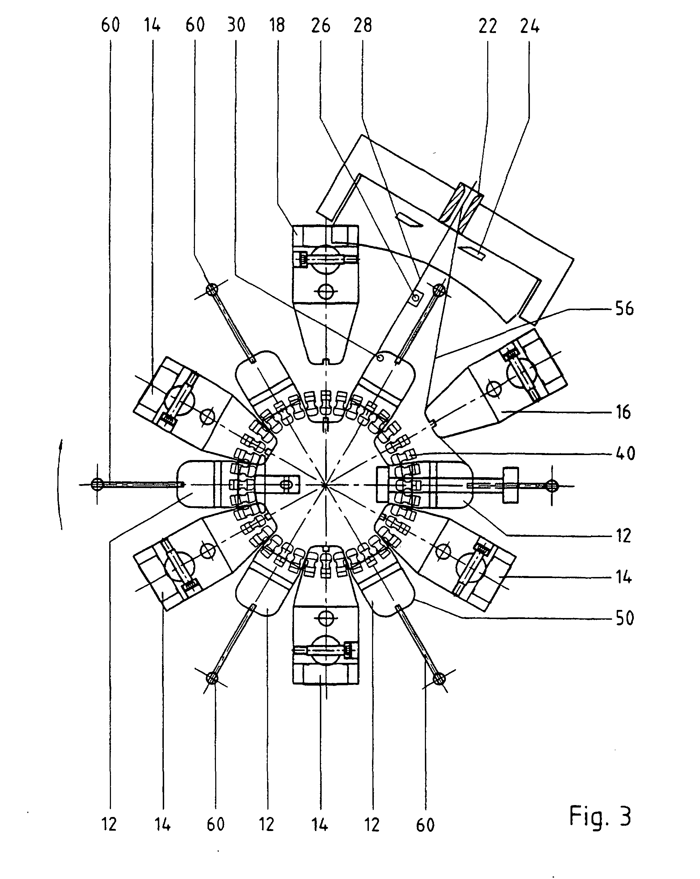

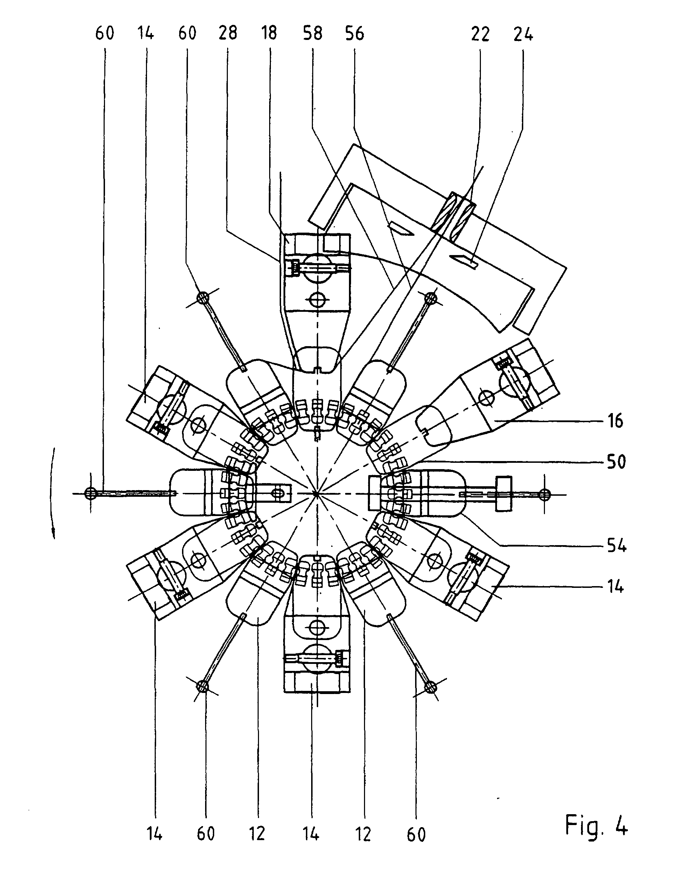

Die Fig. 3 u. Fig. 4 zeigen einen Querschnitt durch Fig. 1 und Fig. 2 und zeigen im einzelnen, daß zwischen der Drahtführungsdüse 22 und der Schablone 12 ein Abschneidmesser 24 und ein Drahtzuführungskopf 26 angeordnet sind, der jeweils den Wickeldrahtanfang 28 einer Klemmeinrichtung 30 an der Schablone 12 zuführt.

Die Schablone 12 besteht im Beispielsfall aus sechs nach außen zeigenden Nocken, wobei die Formelemente 14,16 u. 18 aus sechs nach innen zeigenden Nocken bestehen. Die Formelemente 14,16 u. 18 werden durch eine nicht gezeigte Kurvenbahn - wie bereits in der DE-OS 43 06 624 beschrieben - gesteuert. Hinzu kommt, daß die Formelemente 16 u. 18 durch nicht gezeigte separate Antriebe zusätzlich radial frei steuerbar sind.

Fig. 3 zeigt den Wicklungsdrahtanfang 28 und das Ende 56 der ersten Spulengruppe 50.

Fig. 4 zeigt das an einer Schablonennocke angelegte Ende 56 der ersten Spulengruppe 50, das gleichzeitig der Anfang für die zweite Spulengruppe 54 ist, und das Ende 58 der zweiten Spulengruppe 54.

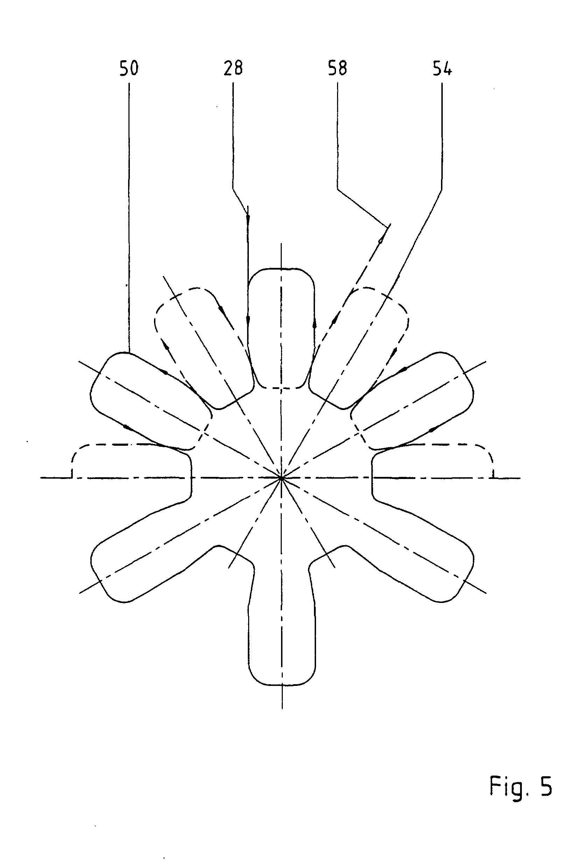

Die Fig. 5 zeigt nur das gewickelte Schaltbild der Spulengruppen 50 und 54, wobei zur besseren Erläuterung die erste Spulengruppe 50 komplett und die zweite Spulengruppe 54 nur zur Hälfte dargestellt ist.

Anhand der Fig. 5 kann die bereits erwähnte Aufgabenstellung der Erfindung näher beschrieben werden. Würde man, wie bereits bekannt, nur die erste - Wellenwicklung - Spulengruppe 50 wickeln und in einen Stator einziehen, so würden die Wickelköpfe die gleiche Windungszahl aufweisen wie die in einer Nute vorhandenen Drähte.

Wickelt man aber die sogenannte "verteilte Wicklung", indem man die Windungszahl einer Phase halbiert, und wickelt die erste Spulengruppe 50 mit der Hälfte der Windungen und dann anschließend mit Schaltverbindung die zweite Spulengruppe 54 mit der zweiten Hälfte der Windungen, so entsteht nach dem Einziehen dieser Phase in den Nuten die geforderte Menge an Drähten, aber die Windungen in den Wickelköpfen sind je zur Hälfte verteilt. Dieses hat den Vorteil, daß die Wickelköpfe nicht so viel auftragen wie bei einer einfachen Wellenwicklung, und er wirkt sich um so stärker aus, wenn 3 Phasen in einen Stator eingezogen werden.

Die Arbeitsweise des erfindungsgemäßen Verfahrens und der Vorrichtung kann nun näher beschrieben werden.

Fig. 3 zeigt den Wicklungsdrahtanfang 28, der durch die Drahtführungsdüse 22 zum Drahtführungskopf 26 führt. Der Drahtführungskopf 26 verfährt mit dem Drahtanfang 28 mittels eines nicht gezeigten Antriebs, führt diesen zur Schablone 12 und übergibt ihn der Klemmeinrichtung 30. Anschließend dreht sich die Schablone 12 zusammen mit den Formelementen 14,16 u. 18 in Uhrzeigerrichtung und wickelt die erste Spulengruppe 50 mit der Hälfte der für eine Phase nötigen Windungen. Nach erfolgter Wicklung der ersten Spulengruppe 50 endet erst einmal deren Ende 56 wie in Fig. 3 gezeigt. Anschließend fährt nur das Formelement 16 radial zur Mitte in seine Endposition vor und legt das Ende über die Einziehlamellen 40. Somit ist die erste Spulengruppe 50 gewickelt, und die Schablone 12 kann in den Spulenaufnehmer 38 eintauchen, und die Spulengruppe 50 wird mittels Abstreifer 60 von der Schablone 12 abgestreift.

Um die zweite Spulengruppe 54 zu wickeln, muß die Schablone 12 aus dem Spulenaufnehmer 38 bis zur Wickelposition knapp über die Einziehlamellen 40 hinausfahren, um anschließend mittels Antriebsmotor 48 den Spulenaufnehmer 38 um eine Polieilung gegenüber der Schablone 12 zu indexieren.

In diesem Beispiel ist es 30° entgegen dem Uhrzeigersinn, so daß das Ende 56, wie in Fig. 4 zu sehen, plaziert ist. Dieses Ende 56 ist jetzt für die zweite Spulengruppe 54 der Anfang, der jetzt schräg vom Spulenaufnehmer 38 zur Drahtführungsdüse 22, wie in Fig. 1 zu sehen, fühlt. Zur besseren Mitnahme des Wickeldrahtes beim Anwickeln kann die Schablone 12 bis in den Bereich der Einziehlamellen 40 bis über die erste Spulengruppe 50 abgesenkt werden, wobei die Formelemente 14,16 u. 18 in ihrer Position über den Einziehlamellen 40 verbleiben.
Da diese schräge Drahtführung auch über eine Flanke einer Nocke der Schablone 12 führt, ist es jetzt einfach, daß beim Anwickeln der zweiten Spulengruppe 54 der Wickeldraht von der Schablone 12 mitgenommen wird.

Vor dem Wickeln fährt jedoch erst einmal die Mitnehmerstange 32 in den Einziehstern 44 und kuppelt dort formschlüssig ein, um beim Drehen der Schablone 12 den Spulenaufnehmer 38 synchron mitzudrehen. Ein synchrones Mitdrehen des Spulenaufnehmers 38 mit der Schablone 12 kann auch schon beim Wickeln der ersten Spulengruppe 50 erfolgen. Vor dem Wickeln der zweiten Spulengruppe 54 ist es in bestimmten Fällen erforderlich, daß ein Niederhalter 36 die bereits gewickelte erste Spulengruppe 50 im Spulenaufnehmer 38 zurück und in Position hält, damit beim Anwickeln der zweiten Spulengruppe 54 sich der Wickeldraht nicht aus dem Spulenaufnehmer 38, sondern nur aus der Drahtführungsdüse 22 nachzieht. Der Niederhalter 36, der nach dem Wickeln der zweiten Spulengruppe 54 zwischen erster und zweiter Spulengruppe liegt, wird mittels Nocke 34 um einen Drehpunkt 62 in einen inneren freien Raum herausgesteuert. Sinnbildlich ist dieses Heraussteuern des Niederhalters (36) in Fig. 1 und Fig.2 von der Mittellinie aus auf der linken Seite gezeigt. Eine Lifteinheit 64 ist so steuerbar, daß die erste Spulengruppe 50 in einer gewünschten Position unterhalb der Oberkante der Einziehlamellen 40 und Niederhalter 36 so gehalten ist, daß ein sicheres Anwickeln der zweiten Spulengruppe 54 gewährleistet ist.

Wie bereits erwähnt, liegt das Ende 56, also der Anfang für die zweite Spulengruppe 54, nach dem Indexieren des Spulenaufnehmers 38, wie in Fig. 1 und Fig. 4 zu sehen ist. Jetzt dreht sich die Schablone 12 zusammen mit dem Spulenaufnehmer 38 entgegen dem Uhrzeigersinn und zieht hierdurch den Wickeldraht aus der Drahtführungsdüse 22 und verformt diesen zu der zweiten wellenförmigen Spulengruppe 54.

Nach dem Wickeln liegt das Ende 58 der zweiten Spulengruppe 54, wie in Fig. 4 gezeigt, vor dem Formelement 18. Jetzt wird das Formelement 18 mittels eines nicht gezeigten Antriebs radial zur Mitte in seine Endposition gefahren, so daß das Ende 58 über die Einziehlamellen 40 gebogen wird. Somit ist auch die zweite Spulengruppe 54 fertig gewickelt.

Da diese zweite Spulengruppe 54 zur ersten Spulengruppe 50 polversetzt und gegenläufig gewickelt wurde, entsteht nach dem Abstreifen der zweiten Spulengruppe 54 in dem Spulenaufnehmer 38 ein Wickelschemabild, wie in Fig. 5 dargestellt. Hierdurch hat sich die Schaltverbindung 52 automatisch beim Anwickeln der zweiten Spulengruppe 54 zwischen den zwei Spulengruppen 50 und 54, ohne eine unnötige Länge zu bilden, integriert. Zum Schluß, nachdem mit einem Abschneidmesser 24 das Ende 58 abgeschnitten wurde, muß die Mitnehmerstange 32 aus dem Spulenaufnehmer 38 herausfahren. Jetzt kann der Spulenaufnehmer 38 zum Beispiel mittels eines nicht gezeigten Rundtisches aus der Wickelposition heraus- und ein neuer Spulenaufnehmer hineinschwenken. Beim Herausfahren der Mittelstange 32 wird gleichzeitig die Nocke 34 mitgenommen und hierdurch der Niederhalter 36 nach innen geschwenkt, so daß er die Spulengruppen freigibt.

Vorteilhaft ist auch, daß mit dieser Vorrichtung auch mehrere Paralleldrähte gewickelt werden können.

Selbstverständlich könnten unzählige weitere Spulengruppen mit Schaltverbindung zur vorher gewickelten folgen. Dieses ist dann nur eine Auslegungssache der Spulengruppen im Stator. Umsomehr eine Phase in Spulengruppen aufgeteilt wird, um so besser ist die Wickelkopfverteilung im Stator, jedoch wirkt sich diese durch häufiges Indexieren der. Schablone 12 zum Spulenaufnehmer 38 negativ auf die Taktzeit aus.

## Patentansprüche

1. Verfahren zur Herstellung einer verteilten Wellenwicklung für elektrische Motoren oder Generatoren, insbesondere solche mit hoher Polzahl, wobei eine erste Spulengruppe einer Phase auf einer in Bezug auf eine festehende Drahtführungsdüse drehbaren Schablone wellenförmig erzeugt und von dieser auf einen axial fluchtenden Spulenaufnehmer übertragen wird, **dadurch gekennzeichnet, daß** nach dem Abstreifen einer konzentrischen Spulengruppe (50) zwischen Schablone (12) und Spulenaufnehmer (38) eine relative Indexierung folgt und anschließend auf der Schablone (12) eine weitere konzentrische Spulengruppe (54) der gleichen Phase mit einer Schaltverbindung (52) zur vorherigen Spulengruppe (50) gewickelt und in den Spulenaufnehmer (38) abgestreift wird.

2. Verfahren nach Anspruch 1, **dadurch gekennzeichnet, daß** die nächste Spulengruppe (54) entgegengesetzt zu der vorherigen Spulengruppe (50) gewickelt wird.

3. Verfahren nach Anspruch 1, **dadurch gekennzeichnet, daß** beim Drehen der Schablone (12) mehrere Paralleldrähte aus einer Drahtführungsdüse (22) herausgezogen werden.

4. Verfahren nach Anspruch 1, **dadurch gekennzeichnet, daß** beim Wickeln jeweils einer weiteren Spulengruppe (54) die Schablone (12) und der Spulenaufnehmer (38) synchron drehen.

5. Verfahren nach Anspruch 1, **dadurch gekennzeichnet, daß** ein Niederhalter (36) die erste Spulengruppe (50) im Spulenaufnehmer (38) so lange zurückhält, bis die zweite Spulengruppe (54) angewickelt ist.

6. Vorrichtung zur Durchführung des Verfahrens nach einem der Ansprüche 1 bis 5, **dadurch gekennzeichnet, daß** die Schablone (12) und der Spulenaufnehmer (38) nach dem Abstreifen mittels Abstreifer (60) einer konzentrischen Spulengruppe (50) durch ein Antriebsmittel (32 oder 48) relativ zu einander indexierbar sind und anschließend auf der Schablone (12) eine weitere konzentrische Spulengruppe (54) der gleichen Phase mit einer Schaltverbindung (52) zur vorherigen Spulengruppe (50) wickelbar und in den Spulenaufnehmer (38) mittels Abstreifer (60) abstreifbar ist.

7. Vorrichtung nach Anspruch 6, **dadurch gekennzeichnet, daß** beim Wickeln jeweils einer weiteren Spulengruppe (54) die Schablone (12) und der Spulenaufnehmer (38) mittels einer in den Einziehstern (44) einkuppelbaren Mitnehmerstange (32) synchron rotierend antreibbar sind.

8. Vorrichtung nach Anspruch 6, **dadurch gekennzeichnet, daß** die erste Spulengruppe (50) beim Anwickeln der zweiten Spulengruppe (54) durch einen Niederhalter (36) zutückzuhalten und dieser mittels Nocke (34) nach innen heraussteuerbar ist.

## Claims

1. A method for producing a distributed wave winding for electric motors or generators, especially those with a high number of poles, in which a first coil group of one phase is generated in wave form on a template rotatable relative to a fixed wire guide nozzle, and is transferred from the template into an axially aligned coil receiver, **characterized in that** after the transfer of a concentric coil group (50) a relative indexing takes place between the template (12) and the coil receiver (38) and after that a further concentric coil group (54) of the same phase with an interconnection (52) to the previous coil group (50) is wound on the template (12) and transferred into the coil receiver (38).

2. The method of claim 1, **characterized in that** the next coil group (54) is wound oppositely to the previous coil group (50).

3. The method of claim 1, **characterized in that** upon rotation of the template (12), a plurality of parallel wires is drawn out of a wire guide nozzle (22).

4. The method of claim 1, **characterized in that** in the winding of each further coil group (50), the template (12) and the coil receiver (38) rotate synchronously.

5. The method of claim 1, **characterized in that** a holding-down device (36) restrains the first coil group (50) in the coil receiver (38) until the second coil group (54) has begun to be wound.

6. A device for performing the method of one of claims 1 through 5, **characterized in that** after the transfer by means of ejectors (60) of a concentric coil group (50) the template (12) and the coil receiver (38) are indexable relative to each other by means of a drive means (32 or 48) and thereafter a further concentric coil group (54) of the same phase with an interconnection (52) to the previous coil group (50) can be wound on the template (12) and transferred into the coil receiver (38).

7. The device of claim 6, **characterized in that** in the winding of each further coil group (54) the template (12) and the coil receiver (38) are rotated synchronously by means of a slaving rod (32) that can be coupled into the insertion star (44).

8. The device of claim 6, **characterized in that** a holding-down device (32) restrains the first coil group (50) as the second coil group (54) is beginning to be wound and can be moved inward by means of a cam 34.

## Revendications

1. Procédé pour produire un enroulement ondulé réparti pour des moteurs électriques ou des générateurs notamment avec un nombre important de pôles,
selon lequel on réalise un premier groupe de bobines d'une phase sur un gabarit de forme ondulée, tournant par rapport à une buse fixe de guidage de fil et on transfère ce groupe de bobines du gabarit sur un récepteur de bobines aligné axialement,
**caractérisé en ce que**
après avoir raclé un groupe de bobines concentriques (50) on effectue un indexage relatif entre le gabarit (12) et le récepteur de bobines (38), et ensuite on enroule sur le gabarit (12) un autre groupe de bobines (54) concentrique de la même phase avec une liaison de commutation (52) avec le groupe de bobines (50) précédent et on le racle dans le récepteur à bobines (38).

2. Procédé selon la revendication 1,
**caractérisé en ce qu'**
on enroule le groupe de bobines suivant (54) à l'opposé du groupe de bobines (50) précédent.

3. Procédé selon la revendication 1,
**caractérisé en ce qu'**
en tournant le gabarit (12) on extrait plusieurs fils parallèles d'une buse de guidage de fil (22).

4. Procédé selon la revendication 1,
**caractérisé en ce qu'**
en enroulant chaque fois un autre groupe de bobines (54), on tourne le gabarit (12) et le récepteur de bobines (38) de façon synchrone.

5. Procédé selon la revendication 1,
**caractérisé par**
un organe d'appui (36) qui retient le premier groupe de bobines (50) dans le récepteur de bobines (38) jusqu'à ce que le second groupe de bobines (54) soit enroulé.

6. Dispositif pour la mise en oeuvre du procédé selon l'une des revendications 1 à 5,
**caractérisé en ce que**
le gabarit (12) et le récepteur de bobines (38) après le raclage par un racleur (60) d'un groupe de bobines concentriques (50), sont indexés l'un par rapport à l'autre par un moyen d'entraînement (32 ou 48) et ensuite sur le gabarit (12) on enroule un autre groupe de bobines concentriques (54) de la même phase avec une liaison de commutation (52) avec le groupe de bobines précédent (50) et on le racle dans le récepteur de bobines (38) avec le racleur (60).

7. Dispositif selon la revendication 6,
**caractérisé en ce qu'**
en enroulant chaque fois un autre groupe de bobines (54), on entraîne de manière synchrone en rotation le gabarit (12) et le récepteur de bobines (38) à l'aide d'une tige d'entraînement (32) couplée à l'étoile d'insertion (44).

8. Dispositif selon la revendication 6,
**caractérisé en ce que**
le premier groupe de bobines (50) lors de l'enroulement du second groupe de bobines (54) est retenu par un organe d'appui (36) et celui-ci est commandé vers l'intérieur par des cames (34).
